# EUROPEAN PATENT APPLICATION

(11) **EP 1 172 746 A2**
(43) Date of publication of application: **16.01.2002**
(21) Application number: 01106183.5
(22) Date of filing: 13.03.2001
(51) Int. Cl.: G06F 17/60

(54) **Method, system, and software for workflow event organization**

(30) Priority: 07.11.2000 US 706725; 14.07.2000 US 218144 P
(71) Applicant: BSP Inc., Tokyo 105 (JP)
(72) Inventor: Miyadai, Isao, c/o BSP Inc., Tokyo 105 (JP)
(74) Representative: Becker Kurig Straus

(57) **Abstract**

A method, system, and software that automates processing of a workflow task accomplished by the cooperation of work performed at least at two sites by receiving a initial request for a completion message, by a communication management server, from an event receiving site, requesting a completion message when a particular event has occurred at an event originator site. Workflow event information regarding the particular event, the corresponding event originator site and the event receiving site is stored in an event table. A monitoring message is sent to the event originator site to monitor the occurrence of the particular event and the communication management server receives, from the event originator site, an event occurrence message indicating that the particular event has occurred. The completion message is sent to the event receiving site, by the communication management server, when the event occurrence message is received by the communication management server

## Description

### CROSS-REFERENCE TO RELATED APPLICATION(S)

This application claims the benefit of priority under 35 U.S.C. §119(e) of provisional application serial number 60/218,144, entitled "System and Software for Event Organization," filed on July 14, 2000, the disclosure which is incorporated herein in its entirety.

### BACKGROUND OF THE INVENTION

### Field of the Invention

This invention relates generally to the field of software that coordinates workflow management and more particularly to system that automatically notifies an event receiving site when a particular workflow event has occurred in an event originator site.

### Background of the Related Art

Generally, in a workflow, workers do their work by using the output of other workers or start/arrange their work by confirming the status of another worker's output. Examples of such work include, for example, computer "Jobs" processed by computers such as mainframe computers, servers or distributed systems, personal computers (PC's) or other distributed computing resources, that are automatically executed and monitored by Job scheduling systems. Examples of such commercially available Job scheduling systems include, for example, A-AUTO provided BSP Inc. or CA-UNICENTER provided by Computer Associates. But these systems can only handle those Jobs whose execution orders have been fixed more or less rigidly. For example, even if some jobs can be conditionally executed, these conditions generally have to be defined in advance and stored in the job scheduling system. That is, there is no ability for an event receiving site to arbitrarily request that it be notified of an event that is to occur at another event originator site so that workflow can be efficiently coordinated.

Furthermore, all such related Jobs typically have to be managed by a single system (at least logically). Therefore, conventional Job scheduling systems are not well suited for managing work (or tasks) which workers carry out interactively with computers (or other computing resources) at their own varied schedules. For example, one workflow task may include processing sales data entered by a sales representative which is entered in a random schedule because the sales representative may be travelling frequently. Furthermore, in a rapidly changing business environment, the analysis "job" requirements based on the sales data may change frequently to respond to the changes in the business environment and/or management priorities. There is no convenient way to interactively schedule these rapidly changing analysis jobs that need to coordinate with, for example, the irregularly entered sales data by the sales representatives.

Most desk tasks using PC's (or the like) are carried out according to each worker's own schedule so that the total workflow schedule is not fixed rigidly in advance and is, moreover, often changed due to the status of the related work or because of a worker's own circumstances. In such cases, a person in charge usually contacts another person in charge of preceding work either in person or by other communication means (for example, by phone or e-mail), to confirm the status of the work and make any necessary alterations to the workflow. However, such confirmation and adjustment of the total workflow schedule is a time consuming and error prone process because the other person may be busy or off duty, or may be working in a different time zone and/or in another country. Furthermore, the back and forth communication of the requested workflow control information may not be transmitted in time and/or may not even be accurately transmitted.

Using the current technology, workers (or supervisors in charge of their work) often use e-mail (or other similar communication systems) to solve this problem. However, when using e-mail, they have to make the effort to send appropriate workflow control information to all the people who require it. Therefore, a worker (or the supervisor in charge of their work) has to make additional efforts to transmit workflow control information to support the succeeding work. This transmission is often uncertain and mistakes can easily happen due to human or system error at both the transmission and receiving ends.

Furthermore, the recipient of the workflow control information may also need to alter his/her own workflow to account for the changes communicated by the workflow control information. If the recipient does not make a timely alteration or makes an incorrect alternation, further inefficiency in introduced into the workflow.

### SUMMARY OF THE INVENTION

Therefore, it is a general object of the invention to alleviate the problems and shortcomings identified above.

In one aspect, the present invention provides a computer implemented method of automated processing of a workflow task accomplished by the cooperation of work performed at least at two sites wherein an event is defined as a completion of a unit of work, the method including the steps of: receiving an initial request for a completion message, by a communication management server, from an event receiving site, requesting a completion message when a particular event has occurred at an event originator site; storing workflow event information regarding the particular event, the corresponding event originator site and the event receiving site in an event table; sending a monitoring message to the event originator site to monitor the occurrence of the particular event; receiving, by the communication management server, from the event originator site, an event occurrence message indicating that the particular event has occurred; and sending the completion message to the event receiving site, by the communication management server, when the event occurrence message is received by the communication management server.

Another aspect of the present invention includes monitoring, by the event originator site, to determine whether the particular event has occurred after receiving the monitoring message.

A further aspect of the present invention includes initiating an action, by the event receiving site, when the completion message is received from the communication management server.

A further aspect of the invention provides that the step of storing information includes performing a security check to verify that the event requesting site is authorized to request the completion message and storing the workflow event information in the event table if the security check verifies that the event originator site is authorized.

In another aspect, the present invention provides that the step of storing information includes receiving authorization from a supervisor before storing the workflow event information in the event table.

In an important aspect of the present invention, the step of sending a monitoring request is performed asynchronously from the step of receiving the initial request.

In one aspect of the invention, the particular event includes any one of start or end of programs or batch computer jobs, message output, completion of creation of a file, invoking an application programming interface (API) notifying that an event has been called, receiving input of a user interaction, or transmission of particular information or data.

In another aspect, the action initiated by the event receiving site includes any one of output of a message, sending an e-mail, activating computer programs or computer jobs, issuing operating system or application commands, calling a telecommunications device, activating a buzzer, leaving a voice mail message, and originating other events by invoking suitable application programming interfaces (API).

In a further aspect, the present invention provides a computer readable data storage medium having program code recorded thereon for automated processing of a workflow task performed by cooperation of work performed at least at two sites wherein an event is defined as a completion of a unit of work. The program code includes: a first program code that receives an initial request for a completion message, in a communication management server, from an event receiving site, requesting a completion message when a particular event has occurred at an event originator site; a second program code that stores workflow event information regarding the particular event, the corresponding event originator site and the event receiving site in an event table; a third program code that sends a monitoring message to the event originator site to monitor the occurrence of the particular event; a fourth program code that receives, by the communication management server, from the event originator site, an event occurrence message indicating that the particular event has occurred; and a fifth program code that sends the completion message to the event receiving site, from the communication management server, when the event occurrence message is received by the communication management server.

In another aspect, the present invention provides a sixth program code that monitors, at the event originator site, whether the particular event has occurred after receiving the monitoring message.

In yet another aspect, the present invention provides a seventh program code that initiates an action, at the event receiving site, when the completion message is received from the communication management server.

In another aspect, the present invention provides an eighth program code that performs a security check to verify that the event requesting site is authorized to request the completion message.

In another aspect, the present invention provides a ninth program code that allows a supervisor to authorize an event receiving site to request a completion message.

In yet another aspect, the third program code send the monitoring message asynchronously relative to the first program code receiving the initial request for the completion message.

In a further aspect, the present invention provides a system for automated processing of a workflow task accomplished by the cooperation of work performed at least at two sites wherein an event is defined as a completion of a unit of work, the system including: a communication management server connected through a computer network to multiple sites, the communication management server comprising computing, communication, data storage, and programming resources to automate processing of the workflow task; an event receiving site comprising computing, communication, data storage, and programming resources, the event receiving site configured to generate an initial request for a completion message to the communication management server, requesting the completion message when a particular event has occurred at an event originator site; the event originator site comprising computing, communication, data storage, and programming resources, the event originator site configured to generate messages and to monitor for the occurrence of events in the event originator site, wherein the communication management server is configured to send a monitoring message to the event originator site to monitor the occurrence of the particular event and send the completion message to the event receiving site when an event occurrence message is received from the event originator site indicating that the particular event has occurred in the event originator site.

In another aspect, the present invention provides that the event originator site monitors to determine whether the particular event has occurred after receiving the monitoring message.

In a further aspect of the present invention, the event receiving site initiates an action after receiving the completion message from the communication management server.

In yet another aspect of the present invention, the communication management server includes an event table for storing information regarding the particular event, the event originator site, and the event receiving site, and the communication management server is configured to perform a security check to determine whether the event receiving site is authorized to generate the initial message for the completion message.

In one aspect of the present invention, the communication management server is configured to allow a supervisor to authorize the initial request from an event receiving site.

In another aspect of the present invention, the communication management server is configured to send the monitoring message to the event originator site asynchronously from receiving the initial request from the event receiving site and sending the completion message to the event receiving site.

### BRIEF DESCRIPTION OF THE DRAWINGS

The accompanying drawings, which are incorporated in and constitute a part of the specification, illustrate a presently preferred embodiment of the invention, and, together with the general description given above and the detailed description of the preferred embodiment given below, serve to explain the principles of the invention.

Fig. 1 is a block diagram showing the components of a general purpose computer system connected to an electronic network.

Figure 2 is a block diagram illustrating the components of a preferred embodiment of the event organizer according to the present invention.

Figure 3 is flow diagram illustrating the process flows of an embodiment of the event organizer according to the present invention.

### DESCRIPTION OF THE PREFERRED EMBODIMENT(S)

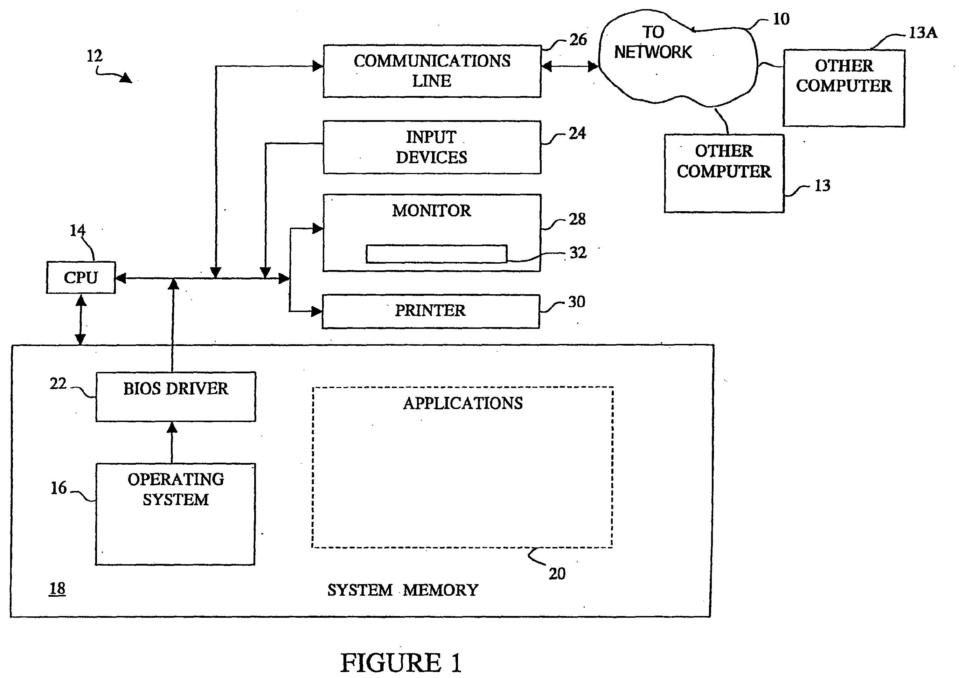

With reference to the figures, Figure 1 is a block diagram showing the components of a general purpose computer system 12 connected to an electronic network 10, such as a computer network. The computer network 10 can also be a public network, such as the Internet or Metropolitan Area Network (MAN), or other private network, such as a corporate Local Area Network (LAN) or Wide Area Network (WAN), or a virtual private network. As shown in the figure 1, the computer system 12 includes a central processing unit (CPU) 14 connected to a system memory 18. The system memory 18 typically contains an operating system 16, a BIOS driver 22, and application programs 20. In addition, the computer system 12 contains input devices 24 such as a mouse and a keyboard 32, and output devices such as a printer 30 and a display monitor 28.

The computer system generally includes a communications interface 26, such as an ethernet card, to communicate to the electronic network 10. Other computer systems 13 and 13A also connect to the electronic network 10. One of skill in the art would recognize that the above system describes the typical components of a computer system connected to an electronic network. It should be appreciated that many other similar configurations are within the abilities of one skilled in the art and all of these configurations could be used with the methods of the present invention. Furthermore, it should be recognized that the computer system and network disclosed herein can be programmed and configured as computing sites (such as a communications management server), by one skilled in the art, to implement the method steps discussed further herein.

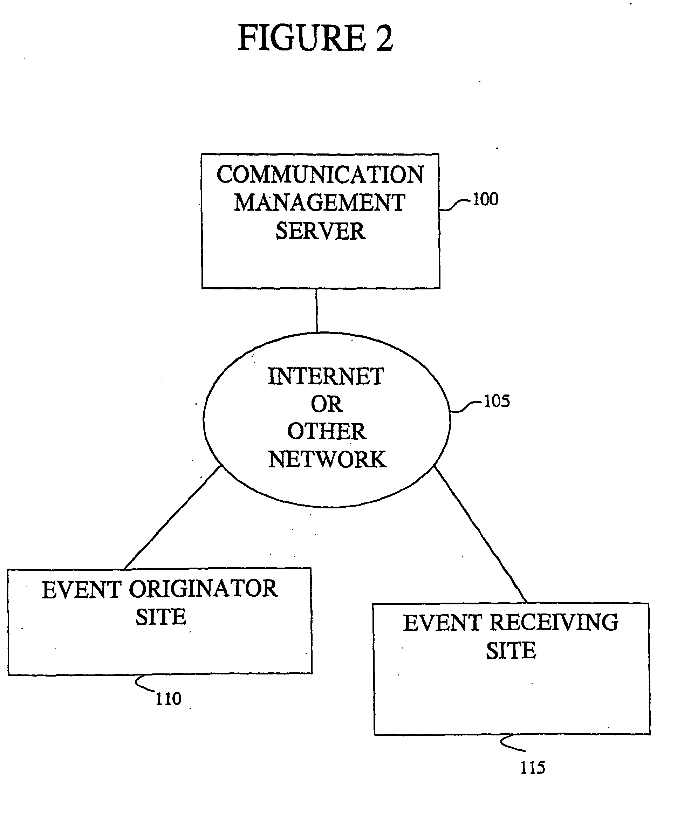

Figure 2 is a block diagram showing the components of one preferred embodiment of the present invention. The "Event Organizer" application provided by the present invention includes at least three important components: (i) a Communication Management Server 100 connected to (ii) one or more Event Originator Site(s) 110, and (iii) one or more Event Receiving Site(s) 115, through a computer network 105. As noted above, the computer network 105 can include a public network, such as the Internet or Metropolitan Area Network (MAN), or other private network, such as a corporate Local Area Network (LAN) or Wide Area Network (WAN). It should be noted that it is important that the Communication Management Server 100 be connected to both the Event Originator Site 110 and the Event Receiving Site 115. But, it is not essential that the all three components be connected to the same network. For example, the Event Originator Site 110 need not be directly connected to the Event Receiving Site 115 as long as each of them can communicate with the Communication Management Server 100.

Even though the Communication Management Server 100, the Event Originator Site 110 and the Event Receiving Site 115 are shown as different components, they can all be hosted at one or more of the same computers or systems. Each of these components include the computing, communications, data storage, and programmed resources and configuration to implement their respective functionalities as discussed further herein. Therefore, the Event Originator Site 110 and Event Receiving Site 115 can, for example, reside in the same computer. Also the Communication Management Server 100 could reside in the same computer as the Event Originator Site 110 and/or Event Receiving Site 115, on condition that, preferably, these computers are active during the same time zone, or active on a 24-hour, 7-days-a-week basis or for some uptime duration during which it can effectively perform the functionality of the Communication Management Server 100 as described further herein. Therefore, in this situation, no separate dedicated server machine is necessary to host the Communication Management Server 100 since the functionality of the Communication Management Server 100 can be adequately performed on the same machine as the Event Originator Site 110 and/or the Event Receiving Site.

In the preferred embodiment, the Communication Management Server 100 creates and manages an Event Table which is accessible by both Event Originator Site 110 and Event Receiving Site 115. The Communication Management Server 100 accepts, transmits, and manages messages from both the Event Originator Site 110 and the Event Receiving Site 115.

The Event Receiving Site 115 is a system that makes an initial request to the Communication Management Server 100 to obtain a requested completion message when a particular event has occurred at another site (the Event Originator Site). The Event Receiving Site also initiates a predefined action(s) when it receives the requested completion message from the Communication Management Server 100.

The Event Originator Site 110 communicates with the Communication Management Server 100 and invokes an "event watcher" application to monitor for specified events when requested to do so by a monitor message from the Communication Management Server 100. The Event Originator Site 110 sends an event occurrence message to the Communication Management Server 100 when the "event watcher" application detects the occurrence of the specified event to be monitored by the Event Originator Site 110.

The event watcher is an application that contains a data structure, such as a table, that records all events to be monitored. It then monitors for the requested event, for example, by periodically reading the process tables for active applications, or scanning the directory structure for particular files. When a monitored event is detected, the Event Originator Site 110 communicates an event occurrence message to the Communication Management Server 100.

One of skill in the art would recognize that other system configurations and data structures could be provided to implement the functionality of the present invention. All such configurations and data structures are considered to be within the scope of the present invention.

One of skill in the art would recognized that the Communication Management Server 100 refers to a logically centralized system that receives and transmits messages from the Event Receiving Site 115 and the Event Originator Site 110 . One skilled in the art would recognize that such a logically centralized system could easily be implemented using a physically distributed system in which one or more processors and databases are connected over a computerized network, and suitable hardware and programmed software is provided to coordinate the processors, databases, and networks to provide the functionalities disclosed herein with respect to the Communication Management Server 100.

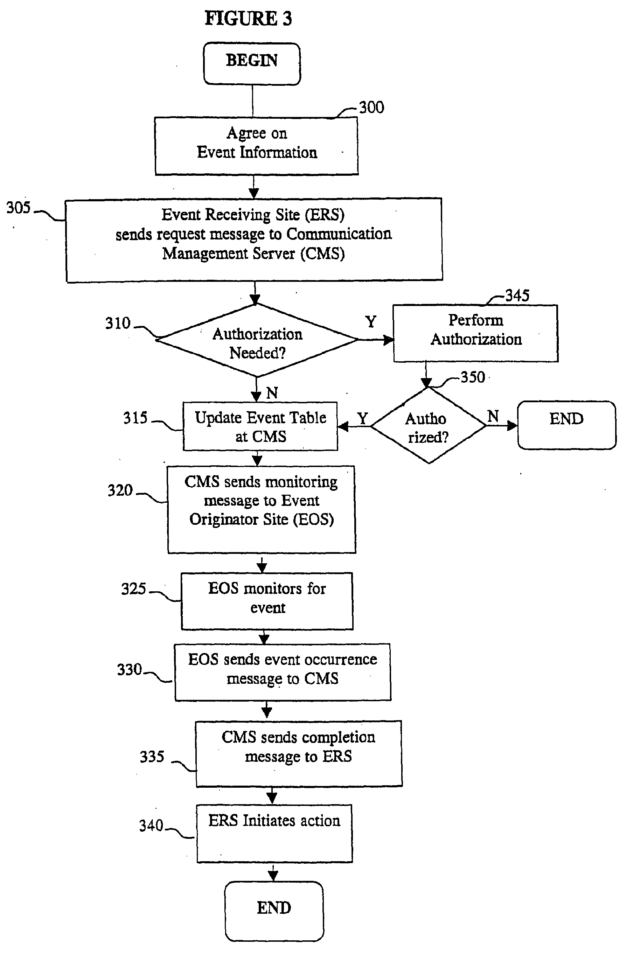

The process steps that implement the preferred embodiment of the event organizer of the present invention are shown in the flow diagram of Figure 3. In the preferred embodiment, as shown in step 300, a user at the Event Originator Site (EOS) 110 and a user at the Event Receiving Site (ERS) 115 have to agree on data relating to or defining an "event." For example, exemplary data relating to an event includes an event name, data or information files to be transmitted, particular application programs to be executed, or particular user interactions to be detected, etc. It should be noted that the data relating to the event is stored, in the preferred embodiment, in the Communication Management Server (CMS) 100. However, it should be understood that the event data can be stored or accessed from any location accessible to the CMS 100. Furthermore, the event data can be used by the ERS 115 and the EOS 110 as long as they also have access to the event data irrespective of where it is defined or stored.

In step 305, the ERS 115 establishes a communication session with the CMS 100 (or uses an existing communication session) and sends to the CMS 100 an initial request for a completion message of a preceding event. The initial request from the ERS 115 to CMS 100 provides sufficient information, at a minimum, about (i) the event whose completion information (or notification) is sought and (ii) the EOS 110 where the event of interest is to be completed. Other event related information can also be communicated in the initial request if desired.

In step 310, the CMS 100 determines if any authorization of the initial request is to be performed. If not, the process advances to next step 315, otherwise it proceeds to step 345 to perform any needed authorization. The authorization step 345 verifies the authority of a user and/or the ERS 115 to make the initial request for the completion message. This authorization can be verified by using automated techniques that are well known to those skilled in the art. For example, the requesting user's ID may be checked against an authorization table or the user may be associated with one or more groups and authorization may be granted (or denied) based on the group associations of the requesting user and/or ERS 115.

Alternatively, a supervisor may be provided access to all or some of the initial requests to grant or deny authorization. Furthermore, the authorization by the supervisor can be combined with automated authorization techniques, for example, by allowing a supervisor to override an authorization (or denial) by an automated authorization system.

In this context, it is also to be understood that the present invention utilizes known security measures for transmission of electronic data across networks. Therefore, encryption, authentication, verification, and other security measures for transmission of electronic data across both public and private networks are provided using techniques that are well known to those skilled in the art.

Once the authorization has been obtained in step 350, or if no authorization was needed in step 310, the CMS 100 updates the event table in step 315. The event table is a data structure and associated software for accessing and updating the data structure that records and tracks the requested event, the EOS 110, and the ERS 115, and any other information related to the requested event whose completion message is requested in the initial request from the ERS 115.

Thereafter, in step 320, the EOS 110 asynchronously establishes a communication session with the CMS 100 for example, at a different timing, from when the initial request was made to the CMS 100. The CMS 100 automatically checks the event table and sends a monitoring message to the EOS 110 if there are any events in the event table that require monitoring of tasks by that EOS 110.

In step 325, the EOS 110 monitors for the events that it has been requested to monitor by the CMS 100. Therefore, the EOS 110 starts up an "event watcher" application that monitors for all the events that it has been requested to monitor by the CMS 100.

In step 330, when the event watcher detects that one of the requested events has occurred at the EOS 110, a event occurrence message is sent by the EOS 110 to the CMS 100. This message can be sent immediately when the requested event is detected by the data watcher or the detected events can be recorded so that a common message can be sent periodically to inform the CMS 100 about all the requested events that have been completed at the EOS 110.

Any required authorization/authentication by the CMS 100 is performed at this stage. Therefore, if the event occurrence message sent by the EOS 110 needed to be authorized, the CMS 100 performs the authorization/authentication using techniques that are similar to that discussed above with reference to step 345. Thereafter, the CMS 100 updates the event table to record the events that have occurred.

In step 335, the CMS 100 transmits the completion message to the ERS 115 for all events that it has received an authorized/authenticated event occurrence message from the EOS 110. It is to be understood that a single ERS 115 can receive completion messages from several different EOS' 110 for one or more events at the respective EOS'. Likewise, the occurrence of a single event at an EOS 110 can result in completion messages to several different ERS' 115. It is important, however, the process steps of the present invention be initiated by an ERS 115 sending an initial request to the CMS 100 requesting a completion message to be generated when a particular event has occurred at one or more of the EOS' 110.

Finally, in step 340, the ERS 115 automatically initiates an "action" that might have been dependent on receiving the completion message of the particular event at the EOS 110. Some examples of actions that can be performed include: (a) to output a message; (b) to send e-mail; (c) to activate Jobs or programs; (d) to issue commands; (e) to call telephone or pager; (f) to activate buzzer or leave a voice message; or (g) to originate Events (done by calling API for transmitting messages).

Some examples of events as used in the present invention include: (a) start/end of programs or Jobs; (b) message output; (c) completion of file creation; (d) API for notifying that an Event is called; (e) Pushing of a button/switch or clicking a mouse on an icon or button on the screen (i.e., by assigning a button or switch to an Event of general desk work, the start or end of the work may be treated as an Event such as those that occur in the computer, such as the start or end of programs); or (f) data transmission: to transmit the requested message, comprising information /data.

Some of the features and advantages of the present invention include:
(i) Since the work process flows automatically and a user can also receive the message automatically, delay or stagnation of the work is greatly reduced.
(ii) With utilization of the Communication Management Server 100 which is, preferably, active on 24-hour, 7-days-a-week basis, the work team can carry out their tasks on schedule, without worrying about the time difference by area or by country.
(iii) By implementing the Communication Management Server 100 with the Internet or other similar private or public internetwork, it can communicate not only with computers but also with PDA's, or cellular phones (CDMA, i mode, etc), other similar information devices and appliances that can serve as the Event Originator Site 110 or Event Receiving Site 115. In this way, workers can originate, receive, and monitor Events from outside office or home.
(iv) The Event Originator Site 110 only needs to communicate with Communication Management Server 100. It transmits the Event occurrence message to the Communication Management Server as soon as the Event has occurred, and does not need to know which Event Receiving Sites 115 have requested the message.
(v) A user at Event Originator Site 110 need not transmit the message to the succeeding users as the user at the Event Receiving Site(s) 115 automatically receives the necessary information via the Communication Management Server 100. The pull technology is more beneficial for the person in charge, while E-mail or other conventional push technology, increases the workload on the person who carries out the assigned work and also gives rise to errors or omissions.
(vi) A succeeding user can expect a message which includes both a notification of the end of the preceding work and any required additional information or data.
(vii) By defining Actions, the Event Receiving Site 115 can automatically initiate pre-defined Actions after the corresponding completion message is received.

Other embodiments of the invention will be apparent to those skilled in the art from a consideration of the specification and the practice of the invention disclosed herein. It is intended that the specification be considered as exemplary only, with the true scope and spirit of the invention being indicated by the following claims.

## Claims

1. A computer implemented method of automated processing of a workflow task accomplished by the cooperation of work performed at least at two sites wherein an event is defined as a completion of a unit of work, the method comprising the steps of:
receiving an initial request for a completion message, by a communication management server, from an event receiving site, requesting a completion message when a particular event has occurred at an event originator site;
storing workflow event information regarding the particular event, the corresponding event originator site and the event receiving site in an event table;
sending a monitoring message to the event originator site to monitor the occurrence of the particular event;
receiving, by the communication management server, from the event originator site, an event occurrence message indicating that the particular event has occurred; and
sending the completion message to the event receiving site, by the communication management server, when the event occurrence message is received by the communication management server.

2. The method according to claim 1, further comprising:
monitoring, by the event originator site, to determine whether the particular event has occurred after receiving the monitoring message.

3. The method according to claim 1, further comprising:
initiating an action, by the event receiving site, when the completion message is received from the communication management server.

4. The method according to claim 1, wherein the step of storing information includes performing a security check to verify that the event requesting site is authorized to request the completion message and storing the workflow event information in the event table if the security check verifies that the event originator site is authorized.

5. The method according to claim 1, wherein the step of storing information includes receiving authorization from a supervisor before storing the workflow event information in the event table.

6. The method according to claim 1, wherein the step of sending a monitoring request is performed asynchronously from the step of receiving the initial request.

7. The method according to claim 1, wherein the particular event includes any one of start or end of programs or batch computer jobs, message output, completion of creation of a file, invoking an application programming interface (API) notifying that an event has been called, receiving input of a user interaction, or transmission of particular information or data.

8. The method according to claim 3, wherein the action includes any one of output of a message, sending an e-mail, activating computer programs or computer jobs, issuing operating system or application commands, calling a telecommunications device, activating a buzzer, leaving a voice mail message, and originating other events by invoking suitable application programming interfaces (API).

9. A computer readable data storage medium having program code recorded thereon for automated processing of a workflow task performed by cooperation of work performed at least at two sites wherein an event is defined as a completion of a unit of work, the program code comprising:
a first program code that receives an initial request for a completion message, in a communication management server, from an event receiving site, requesting a completion message when a particular event has occurred at an event originator site;
a second program code that stores workflow event information regarding the particular event, the corresponding event originator site and the event receiving site in an event table;
a third program code that sends a monitoring message to the event originator site to monitor the occurrence of the particular event;
a fourth program code that receives, by the communication management server, from the event originator site, an event occurrence message indicating that the particular event has occurred; and
a fifth program code that sends the completion message to the event receiving site, from the communication management server, when the event occurrence message is received by the communication management server.

10. The computer readable data storage medium according to claim 9, further comprising a sixth program code that monitors, at the event originator site, whether the particular event has occurred after receiving the monitoring message.

11. The computer readable data storage medium according to claim 9, further comprising a seventh program code that initiates an action, at the event receiving site, when the completion message is received from the communication management server.

12. The computer readable data storage medium according to claim 9, further comprising an eighth program code that performs a security check to verify that the event requesting site is authorized to request the completion message.

13. The computer readable data storage medium according to claim 9, further comprising a ninth program code that allows a supervisor to authorize an event receiving site to request a completion message.

14. The computer readable data storage medium according to claim 9, wherein the third program code send the monitoring message asynchronously relative to the first program code receiving the initial request for the completion message.

15. The computer readable data storage medium according to claim 9, wherein the particular event includes any one of start or end of programs or batch computer jobs, message output, completion of creation of a file, invoking an application programming interface (API) notifying that an event has been called, receiving input of a user interaction, or transmission of particular information or data.

16. The computer readable data storage medium according to claim 11, wherein the action includes any one of output of a message, sending an e-mail, activating computer programs or computer jobs, issuing operating system or application commands, calling a telecommunications device, activating a buzzer, leaving a voice mail message, and originating other events by invoking suitable application programming interfaces (API).

17. A system for automated processing of a workflow task accomplished by the cooperation of work performed at least at two sites wherein an event is defined as a completion of a unit of work, the system comprising:
a communication management server connected through a computer network to multiple sites, the communication management server comprising computing, communication, data storage, and programming resources to automate processing of the workflow task;
an event receiving site comprising computing, communication, data storage, and programming resources, the event receiving site configured to generate an initial request for a completion message to the communication management server, requesting the completion message when a particular event has occurred at an event originator site;
the event originator site comprising computing, communication, data storage, and programming resources, the event originator site configured to generate messages and to monitor for the occurrence of events in the event originator site,
wherein the communication management server is configured to send a monitoring message to the event originator site to monitor the occurrence of the particular event and send the completion message to the event receiving site when an event occurrence message is received from the event originator site indicating that the particular event has occurred in the event originator site.

18. The system according to claim 17, wherein the event originator site monitors to determine whether the particular event has occurred after receiving the monitoring message.

19. The system according to claim 17, wherein the event receiving site initiates an action after receiving the completion message from the communication management server.

20. The system according to claim 17, wherein the communication management server comprises an event table for storing information regarding the particular event, the event originator site, and the event receiving site, and
wherein communication management server is configured to perform a security check to determine whether the event receiving site is authorized to generate the initial message for the completion message.

21. The system according to claim 17, wherein the communication management server is configured to allow a supervisor to authorize the initial request from an event receiving site.

22. The system according to claim 17, wherein the communication management server is configured to send the monitoring message to the event originator site asynchronous from receiving the initial request from the event receiving site and sending the completion message to the event receiving site.

23. The system according to claim 17, wherein the particular event includes any one of start or end of programs or batch computer jobs, message output, completion of creation of a file, invoking an application programming interface (API) notifying that an event has been called, receiving input of a user interaction, or transmission of particular information or data.

24. The system according to claim 19, wherein the action includes any one of output of a message, sending an e-mail, activating computer programs or computer jobs, issuing operating system or application commands, calling a telecommunications device, activating a buzzer, leaving a voice mail message, and originating other events by invoking suitable application programming interfaces (API).
